# FASCICULE DE BREVET EUROPEEN

(11) **EP 1 344 977 B1**
(45) Date de publication et mention de la délivrance du brevet: **30.12.2009**
(21) Numéro de dépôt: 03290326.2
(22) Date de dépôt: 10.02.2003
(51) Int. Cl.: F23C 9/00, F22B 1/18

(54) **Procédé de mise en oeuvre d'une chaudière de récupération de chaleur**
Verfahren zum Betrieb eines Abhitzedampferzeugers
Method of operating a heat recovery boiler

(30) Priorité: 12.03.2002 FR 0203068
(43) Date de publication de la demande: 17.09.2003
(73) Titulaire: L'AIR LIQUIDE, Société Anonyme pour l'Etude et l'Exploitation des Procédés Georges Claude, 75007 Paris (FR)
(72) Inventeur: Labasque, Jacques, 94500 Champigny S/Marne (FR); Segret, Jacques, 75011 Paris (FR)
(74) Mandataire: Ducreux, Marie

(56) Documents cités:
- EP-A- 0 884 468
- EP-A- 1 028 301
- DE-B- 1 173 293
- US-A- 4 936 088
- US-A- 5 411 394
- PATENT ABSTRACTS OF JAPAN vol. 1998, no. 03, 27 février 1998 (1998-02-27) -& JP 09 287418 A (MITSUI ENG &SHIPBUILD CO LTD; NIPPON FURNACE KOGYO KAISHA LTD), 4 novembre 1997 (1997-11-04)

## Description

La présente invention concerne les procédés de mise en oeuvre de chaudières de récupération de chaleur aptes à réaliser une combustion d'au moins un combustible avec un flux d'entrée constitué d'un flux de gaz chauds et/ou d'un flux d'air, dans des unités de cogénération d'électricité et de chaleur, typiquement sous forme de vapeur d'eau.

Un tel procédé est connu du document JP-09287418.

Plus spécifiquement, la présente invention a pour objet de proposer un procédé perfectionné permettant une souplesse accrue d'utilisation de la chaudière et d'en augmenter le rendement thermique notamment en cas de découplage temporaire ou prolongé de la production de chaleur et de la production électrique.

Pour ce faire, selon une caractéristique du procédé selon l'invention, on recycle dans le flux d'air entre 50 et 65% en volume, typiquement entre 55 et 65% du flux de fumées produites par la chaudière.

Selon l'invention, la recirculation importante des fumées en mode de fonctionnement « à l'air » permet de tirer partie de la chaleur résiduelle contenue dans les fumées et de créer un « ballast » de produits de combustion circulant dans la chaudière, ce ballast augmentant la vitesse des fumées et améliorant les coefficients d'échange, rendant ainsi possible le fonctionnement à faible débit d'air avec un rendement thermique tout à fait satisfaisant, supérieur à 90% et pouvant dépasser 92%.

De plus, avec le procédé selon l'invention, la chaudière de récupération peut être utilisée en mode « air frais » non seulement temporairement, mais en mode permanent avec un rendement optimal, en gardant la possibilité d'adjoindre par la suite un moteur ou un groupe turbine à gaz d'entraînement de génératrice et fournissant les gaz chauds sans nécessiter de modifications du groupe de combustion de la chaudière.

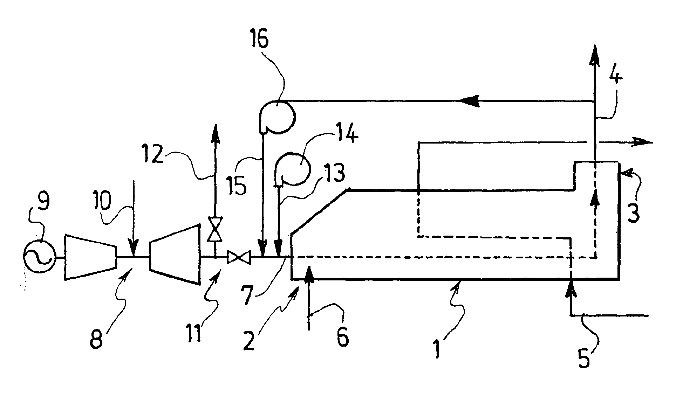

D'autres caractéristiques et avantages de l'invention ressortiront de la description suivante d'un mode de réalisation, donnée à titre illustratif mais nullement limitatif, faite en relation avec le dessin annexé qui représente de façon schématique une installation de cogénération pour la mise en oeuvre de l'invention.

Sur la figure unique, on reconnaît une chaudière de récupération de chaleur 1, comprenant une partie amont incorporant un système de combustion 2 (non représenté en détail) et une partie aval avec une cheminée 3 pour l'évacuation du flux de fumées 4 produites lors de la mise en oeuvre de la chaudière. La chaudière comporte avantageusement plusieurs échangeurs, principalement convectifs, faisant partie d'au moins un circuit de fluide caloporteur 5 produisant en sortie au moins un fluide de travail chaud, typiquement de la vapeur d'eau.

Le système de combustion 2 est alimenté par au moins un circuit 6 d'au moins un combustible, typiquement du gaz naturel ou du gaz de synthèse, et par un circuit 7 de gaz comburant.

En fonctionnement en mode de cogénération, le flux de gaz comburant adressé à la conduite 7 est constitué par le flux de gaz d'échappement d'un moteur, typiquement un groupe turbine à gaz 8, entraînant une génératrice 9 et ayant sa propre alimentation 10 en combustible, typiquement également du gaz naturel ou de synthèse. Un jeu de vannes ou de registres 11 permet d'isoler le conduit d'entrée 7 de la sortie du moteur 8, dont les gaz d'échappement peuvent être dérivés vers une cheminée dite de bi-passe 12.

Selon un aspect de l'invention, dans la conduite 7, débouchent, en aval du jeu de vannes 11, une conduite 13 d'amenée d'air frais légèrement comprimé par une soufflante 14 et une conduite 15 de recyclage des fumées 4 s'échappant de la cheminée 3 ou prélevées en amont des économiseurs dans la chaudière et légèrement comprimées par une soufflante 16. La conduite 15 peut éventuellement déboucher dans la conduite 13.

De la description qui précède, on comprendra que le fonctionnement de l'installation est le suivant :

En mode de cogénération, la quasi totalité des gaz d'échappement du groupe turbine à gaz 8 est adressée à la chaudière 1 où ces gaz d'échappement, contenant encore entre 9 et 16% d'oxygène, sont brûlés en post-combustion avec le combustible 6, les fumées 4 étant totalement évacuées.

Lorsque la fourniture de vapeur dans le circuit 5 est requise, même si le groupe turbine à gaz 8 n'est pas en fonctionnement ou tourne au ralenti, le système de combustion de la chaudière 1 est alimenté en air frais par la conduite 13 et, via la conduite 15, par un flux de fumées plus ou moins important selon la puissance calorique demandée.

Comme explicité plus haut, avec le procédé selon l'invention, la chaudière 1 peut fonctionner de façon autonome en mode « air frais », avec un bon rendement, pendant une longue période de temps, sans être associée au moteur à combustion 8, le flux d'entrée étant exclusivement constitué du mélange d'air amené par la conduite 13 et du flux de fumées recyclées amené par la conduite 15.

En effet, la demanderesse a constaté qu'avec un taux de 45% de recirculation des fumées, le rendement de la chaudière 1 en mode « air frais » dépassait 90%, pour dépasser 92% avec un taux de recirculation supérieur à 60%. De plus, dans ces conditions, les teneurs en oxygène en amont du système de combustion de la chaudière sont comparables à celles attendues en fonctionnement avec les gaz d'échappement du moteur à combustion, ce qui évite donc d'avoir recours à des technologies sophistiquées de brûleurs compatibles avec les différents modes d'utilisation.

## Revendications

1. Procédé pour la génération séquencée ou simultanée d'un fluide chaud de travail et d'électricité, mettant en oeuvre:
- un moteur à combustion (8) entraînant une génératrice (9) et
- une chaudière de récupération de chaleur (1) apte à réaliser la combustion d'au moins un combustible (6) avec un flux d'entrée constitué de gaz chauds et/ou d'air, fonctionnant soit en mode cogénération par admission de la quasi-totalité des gaz d'échappement dudit moteur (8) ou en mode « air frais » quand ledit moteur (8) n'est pas en fonctionnement ou tourne au ralenti,
et **caractérisé en ce que**, dans ce mode « air frais », ladite chaudière (1) reçoit un flux d'air dans lequel on recycle entre 50 et 65% du flux de fumées qu'elle produit.

2. Procédé selon la revendication 1, **caractérisé en ce que** l'on recycle dans le flux d'air entre 55 et 65% du flux de fumées.

3. Procédé selon l'une des revendications précédentes, **caractérisé en ce que** l'on comprime le flux de fumées recyclé.

## Claims

1. Method for the sequenced or simultaneous generation of a hot working fluid and electricity, employing:
- an internal combustion engine (8) driving a generator (9); and
- a heat recovery boiler (1) capable of burning at least one fuel (6) with an incoming stream consisting of hot gases and/or air, operating either in cogeneration mode by admitting practically all the exhaust gases from said engine (8) or in "fresh air" mode when said engine (8) is not operating or is idling,
and **characterized in that**, in this "fresh air" mode, said boiler (1) receives an air stream into which between 50 and 65% of the stream of flue gases that the boiler produces is recycled.

2. Method according to Claim 1, **characterized in that** between 55 and 65% of the stream of flue gases is recycled into the air stream.

3. Method according to either of the preceding claims, **characterized in that** the recycled stream of flue gases is compressed.

## Patentansprüche

1. Verfahren zur aufeinander folgenden oder gleichzeitigen Erzeugung eines heißen Arbeitsfluids oder von Elektrizität, bei dem Folgendes verwendet wird:
- ein Verbrennungsmotor (8), der einen Generator (9) antreibt, und
- ein Abhitzedampferzeuger (1), der die Verbrennung mindestens eines Brennstoffs (6) mit einem aus Heizgasen und/oder Luft bestehenden Zustroms realisieren kann, und der entweder im Kraft-Wärme-Kopplungsmodus durch Einlass fast der gesamten Abgasemissionen des Motors (8) oder im "Frischluft"-Modus, wenn der Motor (8) nicht in Betrieb ist oder sich langsam dreht, arbeitet,
**dadurch gekennzeichnet, dass** der Abhitzedampferzeuger (1) im "Frischluft"-Modus einen Luftstrom empfängt, in dem zwischen 50 und 65% des Abgasstroms, den er erzeugt, rückgeführt werden.

2. Verfahren nach Anspruch 1, **dadurch gekennzeichnet, dass** in dem Luftstrom zwischen 55 und 65% des Abgasstroms rückgeführt werden.

3. Verfahren nach einem der vorhergehenden Ansprüche, **dadurch gekennzeichnet, dass** der rückgeführte Abgasstrom komprimiert wird.
